# FASCICULE DE BREVET EUROPEEN

(11) **EP 2 391 811 B1**
(45) Date de publication et mention de la délivrance du brevet: **25.06.2014**
(21) Numéro de dépôt: 10706020.4
(22) Date de dépôt: 14.01.2010
(51) Int. Cl.: F02K 1/82

(54) **CONDUIT D' ÉCHAPPEMENT INSONORISÉ POUR TURBOMOTEUR**
SCHALLGEDÄMPFTE ABGASLEITUNG FÜR EINEN TURBOMOTOR
SOUNDPROOF EXHAUST DUCT FOR A TURBINE ENGINE

(30) Priorité: 27.01.2009 FR 0950480
(43) Date de publication de la demande: 07.12.2011
(73) Titulaire: Turbomeca, 64510 Bordes (FR)
(72) Inventeur: ARILLA, Jean-Baptiste, F-64570 Lanne (FR); BAUDE, Pierre, Michel, F-64800 Nay (FR); DURAND, Stéphane, Didier, F-64800 Saint Vincent (FR); LADEVEZE, Isabelle, Germaine, Claude, F-64420 Nousty (FR)
(74) Mandataire: Joly, Jean-Jacques
(86) Numéro de dépôt international: PCT/FR2010/050054
(87) Numéro de publication internationale: WO 2010/086536

(56) Documents cités:
- EP-A- 1 010 884
- EP-A- 1 391 597
- US-A- 3 215 172

## Description

### Arrière-plan de l'invention

L'invention concerne un conduit d'échappement insonorisé pour turbomoteur. Un domaine particulier d'application de l'invention est celui du traitement acoustique de tuyère d'un moteur à turbine à gaz notamment pour hélicoptère.

Les progrès réalisés sur la réduction du bruit engendré par la rotation des pales de rotor d'hélicoptère font que le bruit de la turbine d'entraînement des pales devient une composante substantielle de l'émission sonore totale.

Une réduction du bruit de la turbine est alors souhaitable.

A cet effet, il a été proposé dans le document EP 1 010 884 de munir les parois d'une tuyère d'échappement multicanal de turbine d'hélicoptère d'un revêtement d'absorption d'énergie acoustique. Le revêtement est relativement épais au regard des fréquences sonores concernées, ce qui pose des problèmes de masse et d'encombrement

### Objet et résumé de l'invention :

L'invention a pour but de proposer un conduit d'échappement insonorisé pour turbomoteur apportant une insonorisation efficace tout en ayant une structure relativement légère.

Ce but est atteint grâce à un conduit d'échappement comportant :
- une enveloppe intérieure perforée définissant une veine d'écoulement du conduit d'échappement,
- une enveloppe extérieure pleine, les enveloppes intérieure et extérieure définissant entre elles un espace fermé aux extrémités amont et aval dudit espace,
- une âme s'étendant entre les enveloppes intérieure et extérieure, à distance de celles-ci et renfermant au moins une couche dissipatrice d'énergie sonore formée de billes creuses maintenues les unes contre les autres, et
- une armature avec des parties amont et aval reliées entre elles par des longerons, l'armature supportant l'âme et réalisant une compartimentation de celle-ci en plusieurs caissons remplis de billes creuses maintenues entre des textures ajourées,
- l'armature étant solidaire de l'enveloppe extérieure et/ou de l'enveloppe intérieure à l'une au moins des parties amont et aval de l'armature.

Les termes amont et aval sont utilisés ici en référence au sens d'écoulement de flux gazeux dans le conduit d'échappement.

L'armature permet de maintenir, entre les enveloppes intérieure et extérieure, une âme renfermant au moins une couche de billes creuses qui, de façon connue en soi, produisent une forte dissipation de l'énergie sonore. Une insonorisation efficace est alors obtenue avec une structure légère. On utilise avantageusement des billes creuses en céramique à paroi poreuse micro-perforée.

Selon un mode de réalisation, l'enveloppe extérieure constitue une pièce structurale qui, dans sa partie d'extrémité amont est solidaire de la partie amont de l'armature, celle-ci étant à l'aval libre longitudinalement par rapport à l'enveloppe extérieure. La fonction structurale du conduit d'échappement est alors assurée par l'enveloppe extérieure. Des variations dimensionnelles différentielles d'origine thermique entre l'enveloppe extérieure et l'armature sont autorisées par le fait qu'à l'aval, l'armature est libre longitudinalement.

Avantageusement alors, à sa partie aval, l'armature porte un doigt faisant saillie longitudinalement et pouvant coulisser dans un guide solidaire de l'enveloppe extérieure. En outre, une lèvre souple d'étanchéité est interposée dans un intervalle entre les parties aval de l'armature et de l'enveloppe extérieure, évitant une propagation du bruit.

Selon un autre mode de réalisation, l'armature constitue une pièce structurale portant l'enveloppe intérieure et l'enveloppe extérieure. La fonction structurale pour le conduit d'échappement est alors assurée par l'armature.

Dans ce cas, de préférence, l'enveloppe extérieure comprend des tronçons situés dans le prolongement l'un de l'autre, un premier tronçon amont étant relié à la partie amont de l'armature et un tronçon aval étant relié à la partie aval de l'armature. On autorise ainsi des variations dimensionnelles différentielles d'origine thermique entre l'enveloppe extérieure et l'armature.

Avantageusement, dans l'un et l'autre modes de réalisation, l'enveloppe intérieure est solidaire à son extrémité amont ou aval de la partie amont ou aval de l'armature et est libre par rapport à l'armature à son autre extrémité, autorisant des variations dimensionnelles différentielles entre l'enveloppe intérieure et l'armature.

Toujours dans l'un et l'autre modes de réalisation, on peut prévoir au moins une cloison pleine qui s'étend transversalement dans chacun des espaces entre l'âme et les enveloppes intérieure et extérieure, évitant une propagation longitudinale du bruit dans ces espaces. Avantageusement, chaque cloison s'étend de l'enveloppe intérieure ou extérieure à laquelle elle est fixée jusqu'à proximité de l'âme sans contact avec celle-ci.

### Brève description des dessins

L'invention sera mieux comprise à la lecture de la description faite ci-après, à titre indicatif, mais non limitatif, en référence aux dessins annexés, sur lesquels :
- la figure 1 est une vue schématique en coupe longitudinale d'un conduit d'échappement insonorisé selon un mode de réalisation de l'invention ;
- la figure 2 est une vue schématique en perspective de l'armature du conduit insonorisé de la figure 1 ;
- la figure 3 est une vue à échelle agrandie d'un détail de la figure 1 ;
- la figure 4 est une vue montrant notamment une partie de l'âme dissipatrice d'énergie acoustique supportée et compartimentée par l'armature de la figure 2 ;
- la figure 5 est une vue partielle en coupe transversale selon le plan V-V de la figure 4 ;
- la figure 6 est une vue schématique en perspective d'une variante de réalisation de l'armature du conduit insonorisé de la figure 1 ;
- la figure 7 est une vue schématique en coupe longitudinale d'un conduit d'échappement insonorisé selon un autre mode de réalisation de l'invention ; et
- la figure 8 est une vue schématique en perspective de l'armature du conduit insonorisé de la figure 7.

### Description détaillée de modes de réalisation

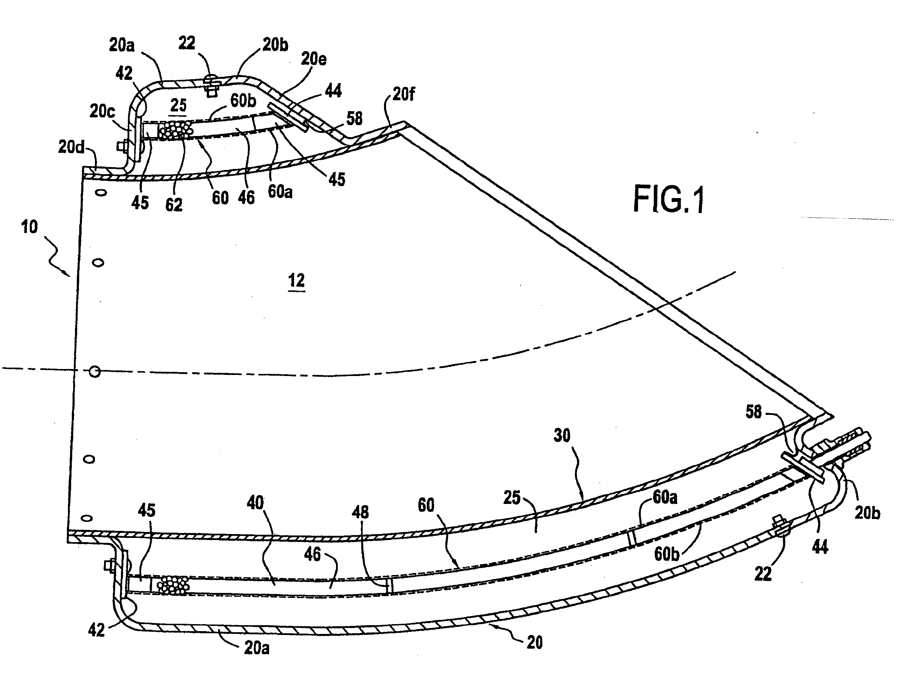

Un premier mode de réalisation d'un conduit d'échappement insonorisé 10 selon l'invention sera décrit en référence aux figures 1 à 5. Le conduit d'échappement 10 est ici une tuyère de moteur à turbine à gaz pour hélicoptère et présente, de façon connue, une forme coudée pour dévier des gaz issus de la turbine hors de la direction vers l'arrière de l'hélicoptère.

Le conduit 10 comprend une enveloppe extérieure pleine 20, une enveloppe intérieure ajourée 30 définissant une veine d'échappement 12 et espacée de l'enveloppe extérieure 20, une armature 40 et une âme 60 dissipatrice d'énergie acoustique qui est supportée et compartimentée par l'armature 40.

Dans ce mode de réalisation, l'enveloppe extérieure 20 assure la fonction structurale du conduit d'échappement. Elle peut être réalisée sous forme d'une tôle métallique, par exemple en alliage de nickel ou obtenue par formage superplastique d'un alliage réfractaire de titane. L'enveloppe 20 est réalisée en deux parties pour permettre le montage du conduit d'échappement : une partie amont 20a et une partie aval 20b fixées l'une à l'autre par exemple par boulonnage ou par des ensembles vis-écrous 22.

L'enveloppe intérieure 30 présente une perméabilité aux ondes sonores. Elle peut être réalisée sous forme d'une tôle métallique perforée par exemple en alliage réfractaire de nickel . Des trous, par exemple d'un diamètre de 1 à quelques millimètres, sont pratiqués dans l'enveloppe 30 sur toute sa longueur et sa périphérie pour permettre le passage d'ondes sonores qui sont réfléchies par l'enveloppe extérieure 20 en traversant l'âme 60. Le taux de perforation de l'enveloppe 30 est par exemple compris entre 10 % et 30 %.

A son extrémité amont, l'enveloppe extérieure 20 est repliée pour former une partie radiale 20c sur laquelle la partie aval de l'armature est montée, comme décrit plus loin, la partie radiale 20c étant prolongée par une partie terminale amont 20d appliquée contre la partie terminale amont de l'enveloppe intérieure 30.

Les parties terminales amont des enveloppes 20 et 30 sont reliées l'une à l'autre et à une partie adjacente (non montrée) d'un carter du moteur, la liaison étant réalisée par exemple par vissage ou par boulonnage.

A son extrémité aval, l'enveloppe extérieure 20 est également repliée pour former une partie transversale 20e prolongée par une partie terminale aval 20f appliquée contre la partie terminale aval de l'enveloppe intérieure 30.

Ainsi, l'espace 25 entre les enveloppes extérieure 20 et intérieure 30 est fermé par des parois pleines imperméables aux ondes sonores aux extrémités amont et aval de cet espace.

On notera que l'enveloppe intérieure 30 est solidaire de l'enveloppe extérieure 20 uniquement à sa partie amont, de manière à permettre un coulissement relatif entre les parties terminales aval des enveloppes 20 et 30 par suite de dilatations différentielles d'origine thermique, l'enveloppe intérieure 30 étant exposée au gaz issus de la turbine. En variante, l'enveloppe 30 peut être fixée à l'enveloppe extérieure uniquement à sa partie aval, en ménageant une possibilité de coulissement à l'amont.

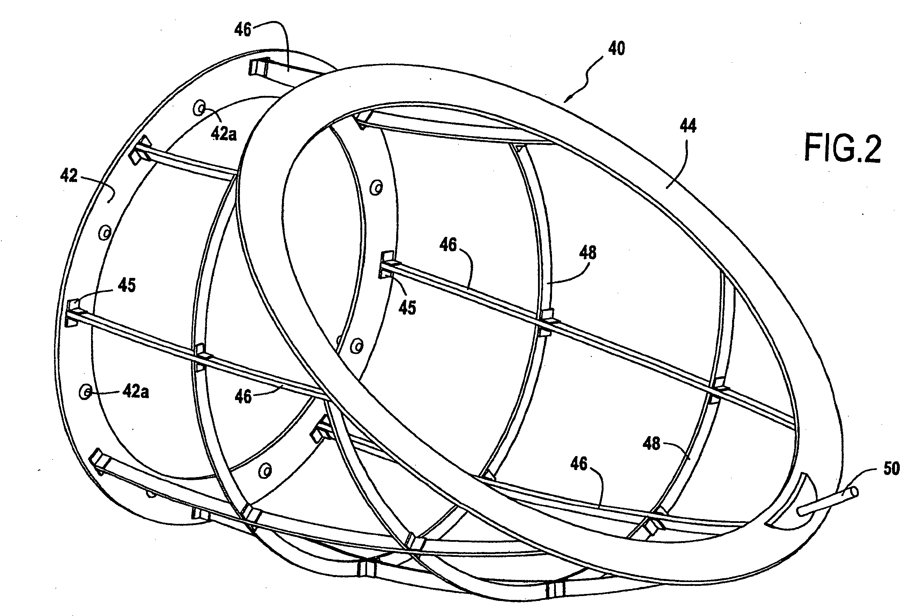

L'armature 40 (figures 1 et 2) comprend une partie amont, par exemple en forme d'anneau radial 42, une partie aval, par exemple en forme d'anneau 44, des longerons longitudinaux 46 reliant les anneaux 42 et 44 et éventuellement des entretoises radiales 48 s'étendant entre des longerons de manière à avoir une armature rigide. A leurs extrémités amont et aval, les longerons 46 sont fixés aux anneaux amont et aval 42, 44 par l'intermédiaire de pattes 45, la fixation étant réalisée par exemple par boulonnage, vissage ou soudage. A leurs extrémités, les entretoises 48 sont fixées de façon similaire aux longerons entre lesquels elles s'étendent. L'armature peut être en un matériau métallique réfractaire, par exemple en alliage de nickel ou en titane.

L'armature 40 est fixée à l'amont de l'enveloppe extérieure 20 par appui de l'anneau amont 42 contre la face interne de la partie radiale 20c de l'enveloppe 20 et liaison par vis-écrous, les vis 42a ayant leurs têtes brasées sur la face interne de l'anneau 42 ou maintenues contre cette face interne par des couvercles brasés ou soudés sur celle-ci.

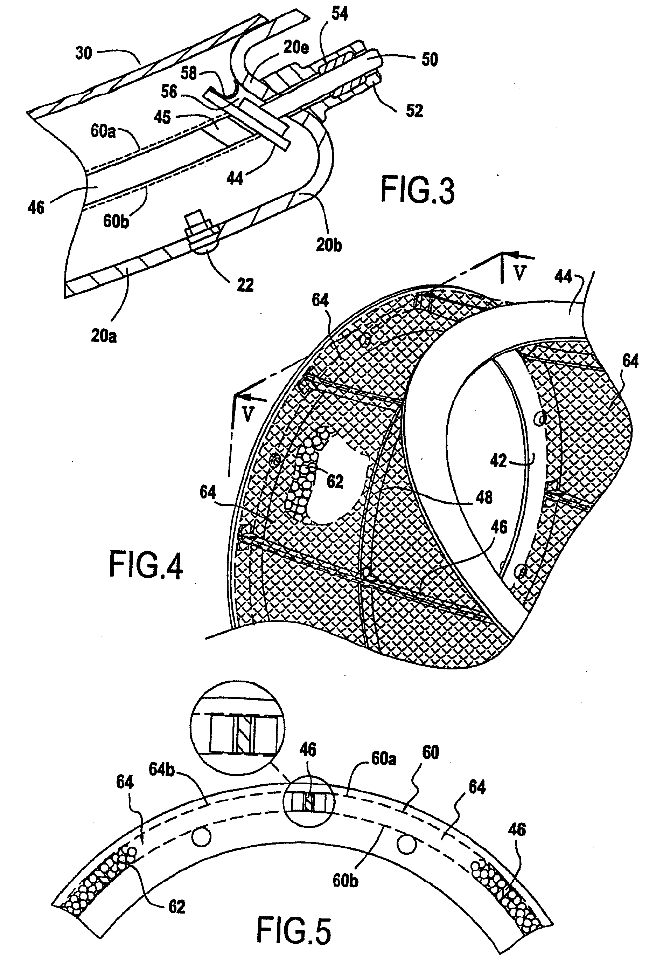

A son extrémité aval, l'armature 40 est libre pour permettre des déplacements dus à des dilatations différentielles entre l'armature 40 et l'enveloppe extérieure 20. Avantageusement, à son extrémité aval, l'armature 40 porte un doigt 50 qui fait saillie vers l'aval à partir de l'anneau aval 44, par exemple dans le prolongement d'un longeron 46. Comme le montre plus en détail la figure 3, le doigt 50 traverse l'enveloppe extérieure dans sa partie transversale 20e et passe dans un guide 52 fixé du côté externe de cette partie transversale 20e. Un coussinet métallique 54 peut être inséré dans le guide 52 pour faciliter le coulissement du doigt 50 lors des déplacements dus à des dilatations différentielles. L'engagement du doigt 50 dans le guide 52 assure en outre un verrouillage de l'armature 40 en rotation par rapport à l'enveloppe extérieure 20.

Pour tenir compte des possibilités de dilatations différentielles, un espace 56 est ménagé entre l'anneau aval 44 de l'armature 42 et la partie transversale 20e à l'aval de l'enveloppe extérieure 20. Une lèvre souple annulaire 58 est insérée dans cet espace en étant fixée, par exemple soudée, sur la face externe de l'anneau aval 44 (ou la face interne de la partie 20e de l'enveloppe 20) et prenant appui sur la face interne de la partie 20e de l'enveloppe 20 (ou sur la face externe de l'anneau aval 44). La lèvre 58 est par exemple en une tôle métallique mince et assure une étanchéité acoustique pour éviter un passage des ondes sonores entre les enveloppes 30 et 20 à l'écart de l'âme 60.

La dissipation d'énergie acoustique par l'âme 60 est obtenue par une couche de billes creuses 62 qui sont maintenues entre deux parois ajourées opposées 60a 60b de l'âme 60, les parois 60a, 60b étant par exemple sous formes de grillages, treillis ou filets métalliques. Seule une partie des billes 62 est représentée sur la figure 1. Les billes 62 sont de préférence des billes creuses en céramique à paroi poreuse microperforée ayant un diamètre moyen par exemple compris entre 1 et quelques millimètres. L'utilisation d'une couche ou lit de telles billes dans une âme d'un panneau insonorisant, dans l'espace entre une paroi perforée et une paroi pleine est connue en soi. On pourra se référer aux documents FR 98 02346 et FR 03 13640, notamment.

L'âme 60 est supportée et compartimentée par l'armature 40, l'âme étant divisée en caissons 64 par les anneaux 42, 44, longerons 46 et entretoises 48, comme le montre la figure 4 (par souci de clarté du dessin, une partie seulement des caissons est montrée sur la figure 4). La paroi ajourée 60a située du côté intérieur de l'âme peut être un grillage, treillis ou filet en une seule pièce qui est fixée sur les bords intérieurs des longerons 46 et entretoises 48, par exemple par micropoints de soudure. La paroi ajourée 60b située du côté extérieur est divisée en éléments de grillage, treillis ou filet individuels 64b pour chaque caisson 64.

Pour le remplissage de chaque caisson 64, après mise en place et fixation de la paroi ajourée 60a on fixe partiellement l'élément de paroi ajouré 64b sur les bords intérieurs des longerons et entretoises délimitant le caisson 64, par exemple par micropoints de soudure. Le caisson est ensuite rempli de billes 62 pour occuper au maximum l'espace du caisson. Les billes sont maintenues serrées les unes contre les autres en terminant la fixation de l'élément de paroi ajouré 64b. Le remplissage des caissons est avantageusement réalisé en déformant élastiquement les parois ajourées qui les bordent, afin de maintenir une pression sur les billes 62 et conserver un contact étroit entre les billes en cas de dilatation des caissons d'origine thermique. Il est en effet souhaitable, pour une meilleure dissipation de l'énergie acoustique, de maintenir un tel contact entre les billes afin d'éviter leur contournement par les ondes sonores. En valeur absolue, la dilatation subie par un caisson étant fonction de ses dimensions, on cherchera un compromis entre la limitation de la taille des caissons et la limitation de la masse de l'armature (donc du nombre de longerons et entretoises). A titre indicatif, les caissons pourront avoir une surface comprise entre 100 et 400 cm².

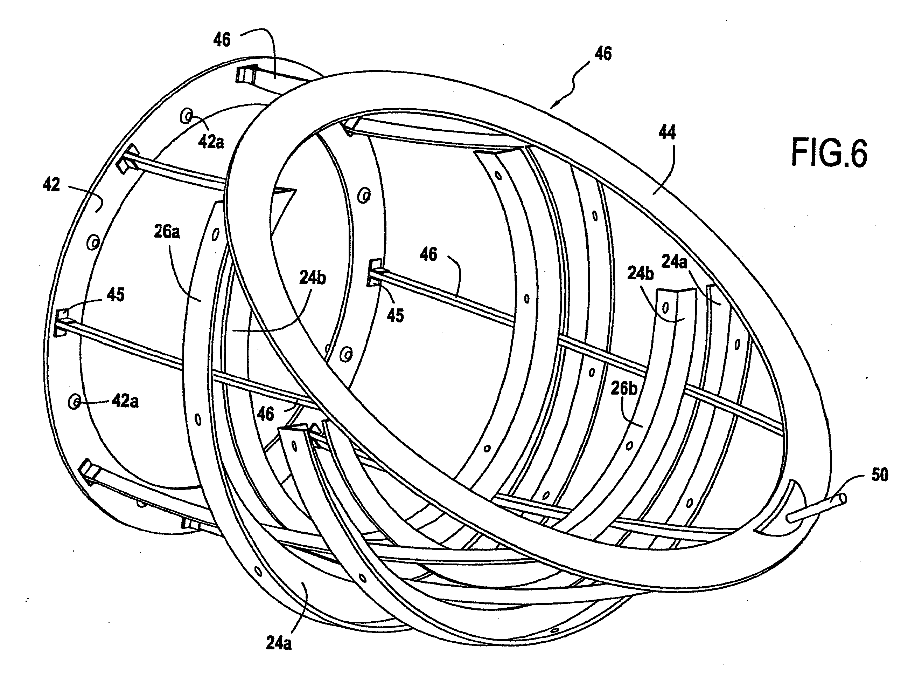

Comme le montre la figure 6, des cloisons radiales ou sensiblement radiales peuvent être disposées dans l'espace 25 entre les enveloppes extérieure 20 et intérieure 30 de manière à s'opposer à une transmission longitudinale des ondes sonores dans cet espace.

Les cloisons peuvent s'étendre tout autour de l'axe longitudinal du conduit d'échappement ou, comme illustré, sur un secteur seulement autour de cet axe, selon l'espace disponible.

Chaque cloison est en deux parties, une partie extérieure 24a s'étendant entre l'âme 60 et l'enveloppe extérieure 20 et une partie intérieure 24b s'étendant entre l'âme 60 et l'enveloppe intérieure 30, de manière à ménager un intervalle pour le passage de l'armature 40 avec un léger jeu. Les parties 24a et 24b sont pleines, c'est-à-dire non ajourées ou perforées, et sont réalisées en un métal, de préférence le même métal que celui de l'armature 40.

Chaque partie extérieure 24a de cloison présente un rebord extérieur 26a pour fixation sur l'enveloppe extérieure 20 tandis que chaque partie extérieure 24b de cloison présente un rebord intérieur 26b pour fixation sur l'enveloppe intérieure 30, la fixation pouvant être réalisée par exemple par boulonnage, vissage, soudage, brasage ou collage.

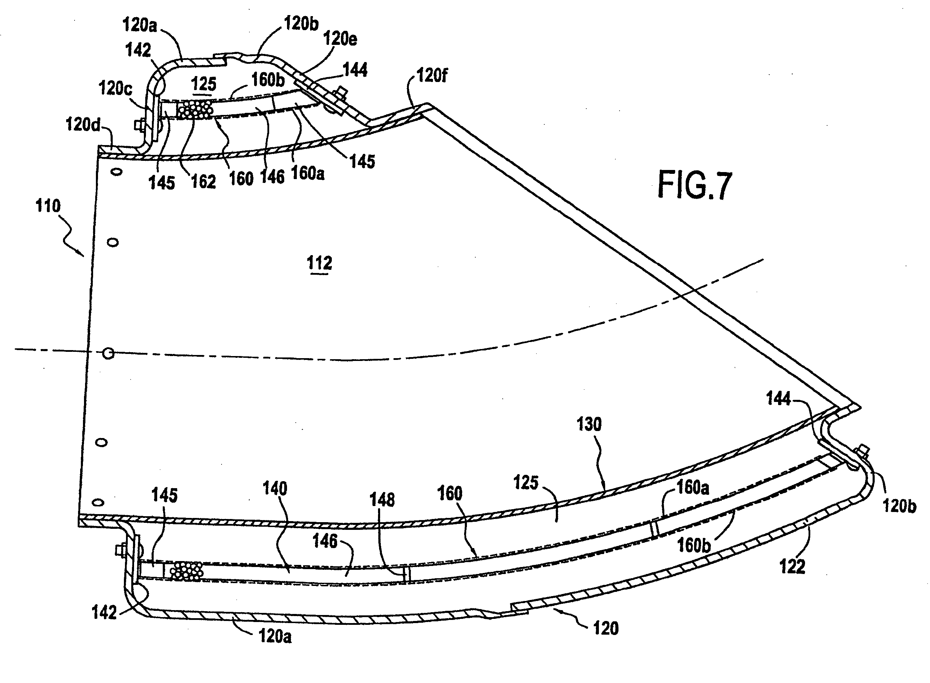

La figure 7 illustre schématiquement un deuxième mode de réalisation d'un conduit d'échappement 110 selon l'invention.

Le conduit 110 comprend une enveloppe extérieure pleine 120, une enveloppe intérieure ajourée 130 définissant une veine d'échappement 112 et espacée de l'enveloppe extérieure 120, une armature 140 et une âme 160 dissipatrice d'énergie acoustique qui est supportée et compartimentée par l'armature 140.

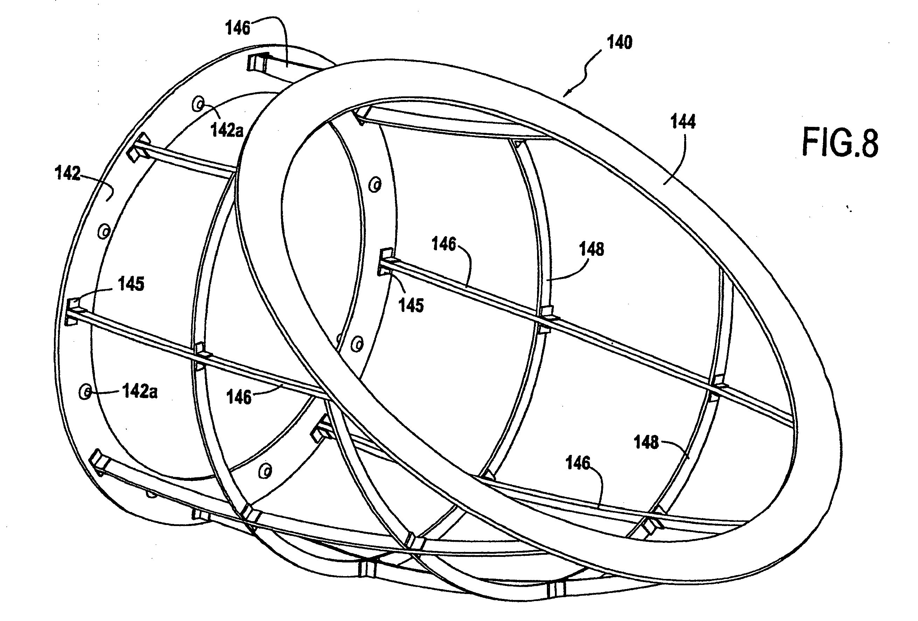

Ce deuxième mode de réalisation se distingue de celui décrit ci-avant en ce que la fonction structurale du conduit d'échappement 110 est assurée par l'armature 140. L'armature 140 est de préférence en un matériau métallique réfractaire, par exemple en alliage de nickel ou titane. De façon similaire à l'armature 40 des figures 1 et 2, l'armature 140 (figures 7, 8) comprend des anneaux amont 142 et aval 144 reliés entre eux par des longerons 146 eux-mêmes reliés par des entretoises 148, les parties constitutives de l'armature étant dimensionnées pour lui conférer le rôle structural souhaité.

L'enveloppe extérieure 120 est en deux parties, une partie amont 120a et une partie aval 120b. A l'amont, la partie 120a est repliée pour former une partie radiale 120c qui est prolongée par une partie terminale amont 120d appliquée contre la partie terminale amont de l'enveloppe intérieure 130. A l'aval, la partie 120b est repliée pour former une partie transversale 120e qui est prolongée par une partie terminale aval 120f appliquée contre la partie terminale aval de l'enveloppe intérieure 130. L'espace 125 entre les enveloppes extérieure 120 et intérieure 130 est ainsi fermé à ses extrémités amont et aval par des parois pleines imperméables aux ondes sonores.

La partie amont 120a de l'enveloppe extérieure 120 est solidaire de l'armature 140 par liaison entre l'anneau amont 142 de l'armature et la partie radiale 120c. La partie aval 120b de l'enveloppe extérieure 120 est solidaire de l'armature 140 par liaison entre l'anneau aval 144 de l'armature et la partie transversale 120e. Les liaisons sont par exemple réalisées par vis-écrous, les vis ayant leurs têtes brasées sur les faces internes des anneaux 142, 144 ou maintenues contre ces faces par des couvercles brasés ou soudés sur celles-ci. En variante, les anneaux amont 142 et/ou aval 144 peuvent être constitués par la partie radiale 120c et/ou la partie transversale 120e de l'enveloppe 120, les longerons 146 étant alors fixés sur la partie radiale 120c et/ou la partie transversale 120e.

L'extrémité aval de la partie amont 120a et l'extrémité amont de la partie aval 120b se raccordent avec recouvrement mutuel pour autoriser un coulissement sous l'effet de dilatations différentielles entre l'armature 140 et l'enveloppe extérieure 120.

Les parties terminales amont des enveloppes 120 et 130 sont reliées l'une à l'autre et à une partie adjacente (non montrée) d'un carter du moteur, la liaison étant réalisée par exemple par vissage ou boulonnage. L'enveloppe 130 est solidaire de l'enveloppe extérieure 120 uniquement à sa partie amont de manière à autoriser un coulissement relatif entre les parties terminales aval des enveloppes 120 et 130 par suite de dilatations différentielles d'origine thermique. En variante, l'enveloppe intérieure 130 peut être fixée à l'enveloppe extérieure uniquement à sa partie aval, en ménageant une possibilité de coulissement à l'amont.

La dissipation d'énergie acoustique par l'âme 160 est obtenue par une couche de billes creuses 162 maintenues entre deux parois ajourées 160a, 160b par exemple en grillage, treillis ou filet métallique. L'âme 160 est divisée par l'armature 140 en caissons garnis des billes 162, de la même manière que l'âme 60 décrite plus haut.

On notera que des cloisons radiales ou sensiblement radiales peuvent être disposées dans l'espace 125 pour s'opposer à une transmission longitudinale des ondes sonores dans l'espace 125, de la même manière que montré sur la figure 6.

Lors du fonctionnement du moteur, les ondes sonores pénètrent dans l'espace 25 ou 125 à travers l'enveloppe intérieure 30 ou 130, et traversent plusieurs fois l'âme 60 ou 160, en étant réfléchies par l'enveloppe extérieure 20 ou 120. Une part significative de l'énergie acoustique est dissipée lors de chaque traversée de la couche de billes de l'âme.

A titre indicatif, avec des billes 62 ou 162 ayant un diamètre moyen de 1 mm à quelques millimètres, par exemple de 1 mm à 3,5 mm , une atténuation acoustique efficace pour les longueurs d'ondes sonores dominantes produites par la turbine est atteinte avec une épaisseur d'âme de 5 mm à 20 mm environ. L'épaisseur totale de la paroi du conduit d'échappement (distance entre les enveloppes extérieure et intérieure) peut alors être comprise entre 50 mm et 200 mm environ .

Dans les modes de réalisation ci-dessus décrits, une seule âme 60 ou 160 est prévue. On pourra en variante avoir plusieurs âmes espacées les unes des autres et espacées des enveloppes extérieure 20 ou 120 et intérieure 30 ou 130, l'armature 40 ou 140 étant alors réalisée avec plusieurs ensembles correspondants de longerons et entretoises pour supporter et compartimenter les âmes.

## Revendications

1. Conduit d'échappement insonorisé de turbomoteur, comportant :
- une enveloppe intérieure perforée (30 ; 130) définissant une veine (12 ; 112) d'écoulement du conduit d'échappement,
- une enveloppe extérieure pleine (20 ; 120), les enveloppes intérieure et extérieure définissant entre elles un espace fermé aux extrémités amont et aval dudit espace, et
- au moins une couche dissipatrice d'énergie sonore disposée dans l'espace entre les enveloppes intérieure et extérieure,
le conduit d'échappement étant **caractérisé en ce que** :
- une âme (60 ; 160) s'étend entre les enveloppes intérieure et extérieure, à distance de celles-ci et renferme au moins une couche dissipatrice d'énergie sonore formée de billes creuses (62 ; 162) maintenues les unes contre les autres, et
- une armature (40 ; 140), avec des parties amont et aval reliées entre elles par des longerons, supporte l'âme et réalise une compartimentation de celle-ci en plusieurs caissons remplis de billes creuses maintenues entre des textures ajourées (60a 60b; 160a 160b),
- l'armature (40 ; 140) étant solidaire de l'enveloppe extérieure (20 ; 120) et/ou de l'enveloppe intérieure (30 ; 130) à l'une au moins des parties amont et aval de l'armature.

2. Conduit selon la revendication 1, **caractérisé en ce que** l'enveloppe extérieure (20) constitue une pièce structurale qui, dans sa partie d'extrémité amont est solidaire de la partie amont de l'armature (40), celle-ci étant à l'aval libre longitudinalement par rapport à l'enveloppe extérieure.

3. Conduit selon la revendication 2, **caractérisé en ce qu'**à sa partie aval, l'armature (40) porte un doigt (50) faisant saillie longitudinalement et pouvant coulisser dans un guide solidaire de l'enveloppe extérieure (20).

4. Conduit selon l'une quelconque des revendications 2 et 3, **caractérisé en ce qu'**une lèvre souple d'étanchéité (58) est interposée dans un intervalle entre les parties aval de l'armature (40) et de l'enveloppe extérieure (20).

5. Conduit selon la revendication 1, **caractérisé en ce que** l'armature (140) constitue une pièce structurale portant l'enveloppe intérieure (130) et l'enveloppe extérieure (120).

6. Conduit selon la revendication 5, **caractérisé en ce que** l'enveloppe extérieure (120) comprend des tronçons situés dans le prolongement l'un de l'autre, un premier tronçon amont (120a) étant relié à la partie amont de l'armature (140) et un tronçon aval (120b) étant relié à la partie aval de l'armature (140).

7. Conduit selon l'une quelconque des revendications 1 à 6, **caractérisé en ce que** l'enveloppe intérieure (30 ; 130) est solidaire à son extrémité amont ou aval de la partie amont ou aval de l'armature (40 ; 140) et est libre par rapport à l'armature à son autre extrémité.

8. Conduit selon l'une quelconque des revendications 1 à 7, **caractérisé en ce qu'**au moins une cloison pleine (24a, 24b) s'étend transversalement dans chacun des espaces entre l'âme (60) et les enveloppes intérieure (30) et extérieure (20).

9. Conduit selon la revendication 8, **caractérisé en ce que** chaque cloison (24a, 24b) s'étend de l'enveloppe intérieure ou extérieure à laquelle elle est fixée jusqu'à proximité de l'âme (60) sans contact avec celle-ci.

10. Conduit selon l'une quelconque des revendications 1 à 9, **caractérisé en ce que** les billes creuses (62 ; 162) sont des billes en céramique à paroi poreuse et micro-perforée.

## Patentansprüche

1. Schallisolierte Auslassleitung eines Turbomotors, umfassend:
- einen perforierten Innenmantel (30; 130), der einen Strömungskanal (12; 112) der Auslassleitung definiert,
- einen massiven Außenmantel (20; 120), wobei der Innen- und der Außenmantel zwischen sich einen Raum definieren, welcher an dem stromaufwärtigen und dem stromabwärtigen Ende des Raums geschlossen ist, und
- wenigstens eine Schallenergie ableitende Schicht, die in dem Raum zwischen dem Innen- und dem Außenmantel angeordnet ist,
wobei die Auslassleitung **dadurch gekennzeichnet ist, dass**:
- ein Steg (60; 160) sich zwischen dem Innen- und dem Außenmantel im Abstand von diesen erstreckt und wenigstens eine Schallenergie ableitende Schicht, welche von gegeneinander gehaltenen hohlen Kugeln (62; 162) gebildet ist, einschließt, und
- ein Rahmen (40; 140), mit untereinander durch Längsträger verbundenen stromaufwärtigen und stromabwärtigen Teilen, den Steg trägt und eine Unterteilung dessen in mehrere Kammern, welche mit zwischen durchbrochenen Strukturen (60a, 60b; 160a, 160b) gehaltenen hohlen Kugeln gefüllt sind, herstellt,
- wobei der Rahmen (40; 140) mit dem Außenmantel (20; 120) und/oder mit dem Innenmantel (30; 130) an wenigstens einem der stromaufwärtigen und stromabwärtigen Teile des Rahmens fest verbunden ist.

2. Leitung nach Anspruch 1, **dadurch gekennzeichnet, dass** der Außenmantel (20) ein Strukturteil bildet, das in seinem stromaufwärtigen Endteil fest mit dem stromaufwärtigen Teil des Rahmens (40) verbunden ist, wobei dieser in Bezug auf den Außenmantel stromabwärtig in Längsrichtung frei ist.

3. Leitung nach Anspruch 2, **dadurch gekennzeichnet, dass** der Rahmen (40) an seinem stromabwärtigen Teil einen Finger (50) trägt, der in Längsrichtung vorragt und der in einer mit dem Außenmantel (20) fest verbundenen Führung gleiten kann.

4. Leitung nach einem der Ansprüche 2 und 3, **dadurch gekennzeichnet, dass** eine flexible Dichtungslippe (58) in einem Zwischenraum zwischen den stromabwärtigen Teilen des Rahmens (40) und des Außenmantels (20) eingefügt ist.

5. Leitung nach Anspruch 1, **dadurch gekennzeichnet, dass** der Rahmen (140) ein den Innenmantel (130) und den Außenmantel (120) tragendes Strukturteil bildet.

6. Leitung nach Anspruch 5, **dadurch gekennzeichnet, dass** der Außenmantel (120) Abschnitte, welche in der Verlängerung voneinander gelegen sind, umfasst, wobei ein erster stromaufwärtiger Abschnitt (120a) mit dem stromaufwärtigen Teil des Rahmens (140) verbunden ist und ein stromabwärtiger Abschnitt (120b) mit dem stromabwärtigen Teil des Rahmens (140) verbunden ist.

7. Leitung nach einem der Ansprüche 1 bis 6, **dadurch gekennzeichnet, dass** der Innenmantel (30; 130) an seinem stromaufwärtigen oder stromabwärtigen Ende mit dem stromaufwärtigen oder stromabwärtigen Teil des Rahmens (40; 140) fest verbunden ist und an seinem anderen Ende gegenüber dem Rahmen frei ist.

8. Leitung nach einem der Ansprüche 1 bis 7, **dadurch gekennzeichnet, dass** wenigstens eine massive Trennwand (24a, 24b) sich in jedem der Räume zwischen dem Steg (60) und dem Innenmantel (30) und Außenmantel (20) quer erstreckt.

9. Leitung nach Anspruch 8, **dadurch gekennzeichnet, dass** jede Trennwand (24a, 24b) sich von dem Innen- oder Außenmantel, an dem sie befestigt ist, bis in die Nähe des Stegs (60) ohne Kontakt mit diesem erstreckt.

10. Leitung nach einem der Ansprüche 1 bis 9, **dadurch gekennzeichnet, dass** die hohlen Kugeln (62; 162) Keramikkugeln mit poröser und mikroperforierter Wand sind.

## Claims

1. A soundproofed exhaust duct for a turbomachine, the duct comprising:
· a perforated inner shell (30; 130) defining a flow passage (12; 112) of the exhaust duct;
· a solid outer shell (20; 120), the inner and outer shells defining between them a space that is closed at the upstream and downstream ends of said space; and
· at least one sound energy dissipating layer located in the space between the inner and outer shells; the exhaust duct being **characterized by**:
· a core (60; 160) extending between the inner and outer shells, at a distance therefrom, and containing at least one sound energy dissipating layer made up of hollow beads (62; 162) that are held against one another; and
· a frame (40; 140) having upstream and downstream portions that are connected together by longitudinal members, the frame supporting the core and partitioning it into a plurality of boxes that are filled with hollow beads held between two perforated textures (60a, 60b; 160a, 160b);
· the frame (40; 140) being secured to the outer shell (20; 120) and/or to the inner shell (30; 130) via at least one of the upstream and downstream portions of the frame.

2. A duct according to claim 1, **characterized in that** the outer shell (20) constitutes a structural part that has its upstream end portion secured to the upstream portion of the frame (40), the latter having its downstream portion free to move longitudinally relative to the outer shell.

3. A duct according to claim 2, **characterized in that** in its downstream portion, the frame (40) carries a longitudinally-projecting finger (50) capable of sliding in a guide that is secured to the outer shell (20).

4. A duct according to claim 2 or claim 3, **characterized in that** a flexible sealing lip (58) is interposed in a gap between the downstream portions of the frame (40) and of the outer shell (20).

5. A duct according to claim 1, **characterized in that** the frame (140) constitutes a structural part carrying the inner shell (130) and the outer shell (120).

6. A duct according to claim 5, **characterized in that** the outer shell (120) comprises segments that extend one another, an upstream first segment (120a) being connected to the upstream portion of the frame (140), and a downstream segment (120b) being connected to the downstream portion of the frame (140).

7. A duct according to any one of claims 1 to 6, **characterized in that** the inner shell (30; 130) is secured at its upstream or downstream end to the upstream or downstream end of the frame (40; 140) and is free relative to the frame at its other end.

8. A duct according to any one of claims 1 to 7 **characterized in that** at least one solid partition (24a, 24b) extends transversely in each of the spaces between the core (60) and the inner (30) and outer (20) shells.

9. A duct according to claim 8, **characterized in that** each partition (24a, 24b) extends from the inner or outer shell to which it is fastened to the proximity of the core (60), without making contact with the core.

10. A duct according to any one of claims 1 to 9, **characterized in that** the hollow beads (62; 162) are ceramic beads with a microperforated porous wall.
